# EUROPEAN PATENT APPLICATION

(11) **EP 1 443 742 A1**
(43) Date of publication of application: **04.08.2004**
(21) Application number: 03002237.0
(22) Date of filing: 31.01.2003
(51) Int. Cl.: H04M 3/54, H04M 3/42

(54) **Method of controlling duration of forwarding call connections within a telecommunication network**

(71) Applicant: SIEMENS AKTIENGESELLSCHAFT, 80333 München (DE)
(72) Inventor: Foradoula, Sofia, Athen (GR); Gellas, Georgios, 13671 Athen (GR); Perrakis, Ioannis, 11631 Athen (GR); Plita, Irini, Athen (GR); Zanidakis, Konstantinos, 17237 Athen (GR)

(57) **Abstract**

The present invention comprises a method of controlling duration of forwarding call connections within a telecommunication network and a switching system which is suitable for using the method. In a telecommunication network a call connection can be established trough the network (Network) between a calling party (Sub A) and a first called party (Sub B). The method according to the invention comprises the following steps:
- Activating a call forwarding procedure,
- initiating a timer by setting a predefined time period,
- forwarding an established call connection from the first called party (Sub B) to a second called party (Sub C),
- disconnecting the call connection between said parties, and
- deactivating the call forwarding procedure afterwards when expiring the predefined time period.

## Description

The present invention relates to a method of controlling duration of forwarding call connections and a switching system which is suitable for using the method.

### BACKROUND OF INVENTION

This invention is used in the telecommunications field and extends the usage of an already known feature called "Call Forwarding".

Call Forwarding feature (further mentioned as CF) is used by ISDN/PSTN telephony users who wish to forward their incoming calls to another subscriber number. Call Forwarding can be "Unconditional" (CFU), "On no Reply" (CFNR), "On Busy Subscriber" (CFBY) and Call Deflection (CD).

CFU is used for ISDN telephony users who wish to directly and unconditionally forward their call to another destination subscriber number.

CFNR is used for ISDN telephony users who wish to forward their call to another destination subscriber number whenever they're not present during the call attempt (forwarding is performed after a default time).

CFBY is used for ISDN telephony users who wish to forward directly their call to another destination subscriber number whenever their original subscriber line is busy.

CD is used for ISDN telephony users who wish to forward (deflect) an incoming call interactively (on demand) to another destination subscriber number.

CF feature is controlled by the served user by Subscriber Control Input function or by the network administrator by Man-Machine Language (MML) Commands.

Subscriber Control Input (further mentioned as SCI) is a served user provided function by which the public switch user can either request a function from the public switch or inform it about a situation.

MML Commands are commands given from the network administration to the telecommunication switch in order to control/alter the switch's behaviour.

The activation of CF is controlled by SCI or MML as it is shown below:
- SCI interface (user defined option):
   a) Using Keypad protocol (e.g. LH DT # <Code for Activation of Unconditional Forwarding >* <Forwarding Number> # RH).
   b) Using Functional protocol by selecting to activate the "Call Forwarding Unconditional" feature on the display of the ISDN phone and by entering the Forwarded Number.
- MML Interface (network administrator option):
   MODSUB:LAC=lac,DN=dn,DIV=ACTDIVI-target #,SERV=service;

The deactivation is done similarly by:
- SCI interface (user defined option):
   a) Using Keypad protocol (e.g. LH DT #<Code for Deactivation of Unconditional Forwarding># RH)
   b) Using Functional protocol by selecting to deactivate the "Call Forwarding Unconditional" feature on the display of the ISDN phone.
- MML Interface (network administrator option):
   MODSUB:LAC=lac,DN=dn,CDIV=ACTDIVI,SERV=service;

The above mentioned abbreviations meaning is explained below:

LH= Lift handset, DT= Dial tone, RH= Replace handset, DN= directory number, LAC= local area code, DIV= activate a specific CF type + target subscriber number, CDIV= deactivate a specific CF type.

### SUMMARY OF INVENTION

The present invention aims to provide a method and a switching system for use in a telecommunication network which improves the call forwarding connection control.

Said problems are solved by the features mentioned in the independent claims regarding a method and regarding a switching system. Preferred embodiments of the invention are described in the dependent claims.

Accordingly, an aspect of the present invention is a method and a system to enable controlling CF feature.

The present invention introduces a possibility of activating the "Call Forwarding" feature, in order to give the served user the possibility to assign a time limit of the duration of feature's activation.

By this change, when the time limit has been reached CF will be automatically disabled by the network and after that all incoming calls are going to be delivered normally to the served user's original subscriber number.

It should be noted here that for this invention all type of CF are involved except Call Diflection because at this type of CF the activation is done instantly by the user and issues only for the Call Deflected transaction.

For the implementation of this invention, the activation procedure of CF must be extended (e.g. Keypad method), in order to be able to define the time limit within CF will be active.

This will be done by assigning a special CF supervision timer and when this timer expires then a message is sent to the database administration processor and MML handler so that CF will be deactivated. Additionally, a message must be sent for both Call Forwarding and Call Forwarded subscriber devices which will notify them for the automatic deactivation of CF.

The time duration at which CF will be active (before the automatic deactivation) will be equal to the time defined from the served user or the network administrator. To give this information an addition to SCI interface and to MML for CF feature is necessary. This means that additional the SCI send from the served user to the network will be larger.

The activation of the time controlled CF (further mentioned as TCF) is done in the following manner:
- SCI interface (user defined option):
   a) Using Keypad protocol (e.g. LH DT #<Code for Deactivation of Unconditional Forwarding># <Time before automatic deactivation of CF># RH)
   b) Using Functional protocol by selecting to deactivate the "Call Forwarding Unconditional" feature on the display of the ISDN phone, by entering the Forwarded Number and the time before automatic deactivation of CF.
- MML Interface (network administrator option):
   MODSUB:LAC=lac,DN=dn,DIV=ACTDIVI-target #,TIME=HHMM, SERV=service;
where TIME= time before automatic deactivation, HH=hours, MM=miutes.

In case the activation by Functional protocol is done by selecting the required feature, at the display, the software of the ISDN apparatus (menu) should be upgraded, in a order to give the CF served user the option to enter the value of the time before automatic deactivation of CF.

For the implementation of the current invention at the public switch, software changes are needed at the processor which handles CF feature (Group processor (= GP) for the product "EWSD" of the company Siemens AG) in order to be able to handle the new input (special CF supervision timer duration) and the expiration of the new timer (new steptables, state, routines are needed). Also adaptations in database administration processor and MML handler (Central processor (= CP) for EWSD product) will be necessary in order to be able to handle the enhanced MML for CF.

The current invention gives the opportunity for all users to adjust the duration of activation of "Call Forwarding" feature according to their time schedule. By this, the served users will no longer have to deactivate CF theirselfs because this will be done automatically. Additionally - and most importantly - no call will be missed if CF deactivation was forgotten.

### BRIEF DESCRIPTION OF THE DRAWINGS

Preferred embodiments of the present invention will now be described with reference to the accompanying drawing in which:
The figures show the call flow between the subscribers and the switch - network (e.g. EWSD) in case of the Controlled duration of call forwarding feature.
Figure 1 shows an example of the Controlled duration of call forwarding feature, in case of CF on busy subscriber (CFBY) including the TCF activation procedure using SCI interface with Functional protocol.
Figure 2 shows an example of the Controlled duration of call forwarding feature, in case of CF On No Reply (CFNR) of Sub B to Sub C including the TCF activation procedure using SCI interface with Functional protocol.
Figure 3 shows an example of the Controlled duration of call forwarding feature, in case of CF Unconditional (CFU) including the TCF activation procedure using SCI interface with Functional protocol.
Figure 4 shows an example of the Controlled duration of call forwarding feature, in case of CF on busy subscriber (CFBY) including the TCF activation procedure using SCI interface with Keypad protocol.
Figure 5 shows an example of the Controlled duration of call forwarding feature, in case of CF On No Reply (CFNR) of Sub B to Sub C including the TCF activation procedure using SCI interface with Keypad protocol.
Figure 6 shows an example of the Controlled duration of call forwarding feature, in case of CF Unconditional (CFU) including the TCF activation procedure using SCI interface with Keypad protocol.

### DETAILED DESCRIPTION OF EMBODIMENTS OF THE INVENTION

In the figures show schematic flow charts. Sub A is a calling party (subscriber or user), Sub B is a first called party and Sub C is a second called party. A call connection among the parties can be established through the telecommunication network (simply mentioned as network), which usually comprises at least one switching system (not shown). The message flow is depicted and comprises short description.

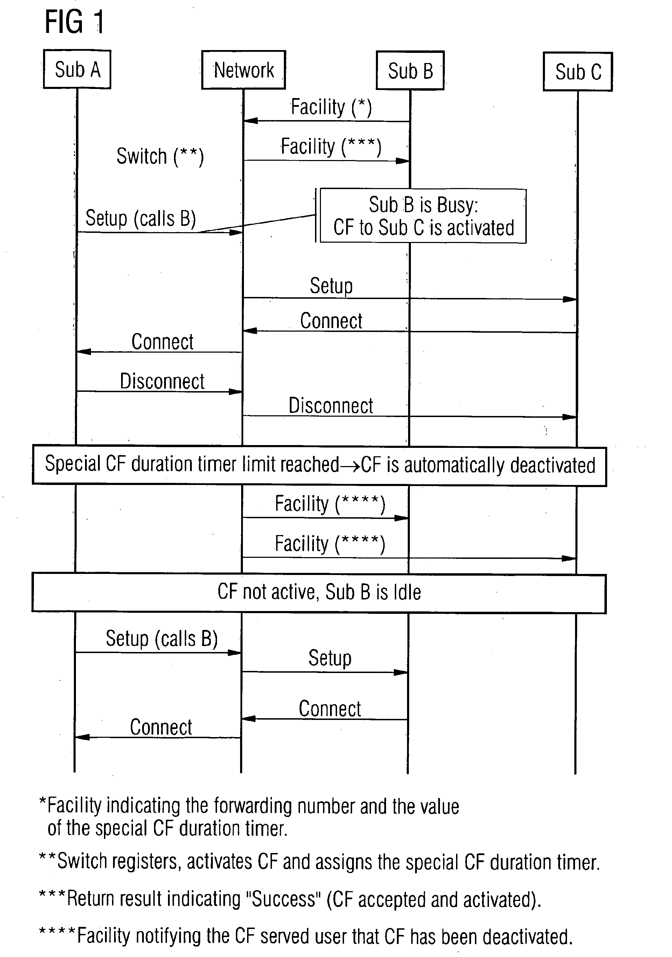

At figure 1 Sub B activates TCF (on Busy Subscriber) by giving information about the forwarded to subscriber number and the time duration before automatic CF deactivation by the Network. This is done by sending an SCI using Functional protocol. Then network acknowledges the request from the user with indication success. Sub A calls B Sub who is busy. Then CF is activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

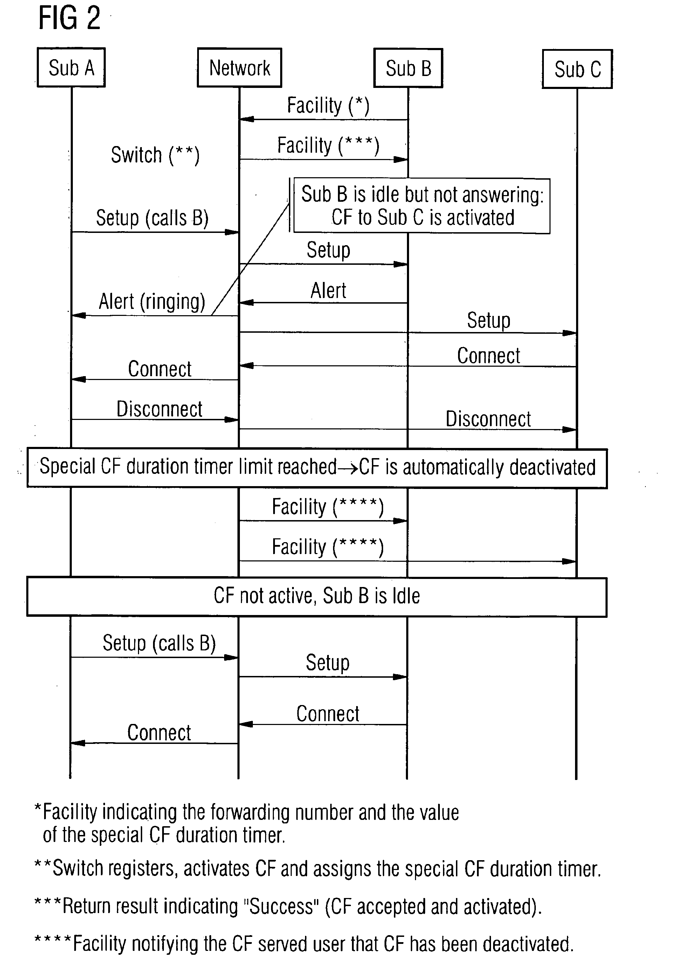

At figure 2 Sub B activates TCF (on No Reply) by giving information about the forwarded to subscriber number and the time duration before automatic CF deactivation by the Network. This is done by sending an SCI using Functional protocol. Then network acknowledges the request from the user with indication success. Sub A calls B Sub who is idle but doesn't answer the call. Then CF is activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

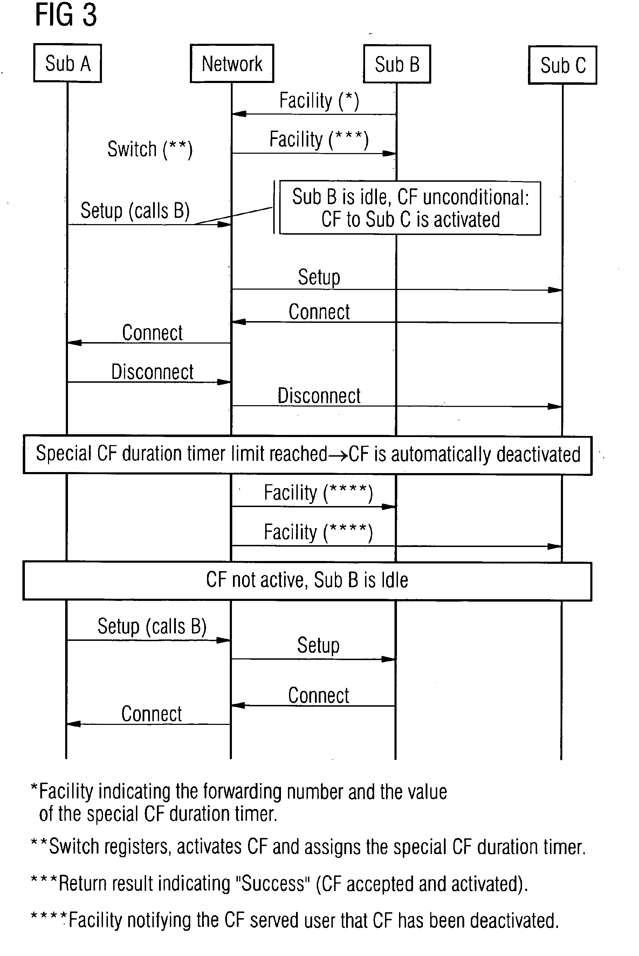

At figure 3 Sub B activates TCF (Unconditional) by giving information about the forwarded to subscriber number and the time duration before automatic CF deactivation by the Network. This is done by sending an SCI using Functional protocol. Then network acknowledges the request from the user with indication success. Sub A calls B Sub, CF is unconditionaly activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

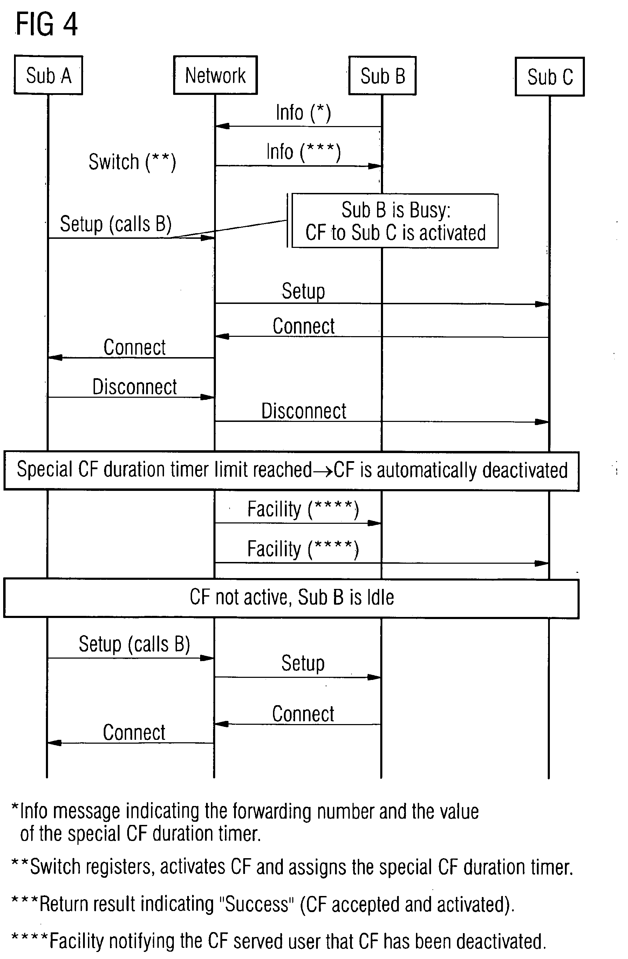

At figure 4 Sub B activates TCF (on Busy Subscriber) by giving information about the forwarded to subscriber number and the time duration before automatic CF deactivation by the Network. This is done by sending an SCI using Keypad protocol. Then network acknowledges the request from the user with indication success. Sub A calls B Sub who is busy. Then CF is activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

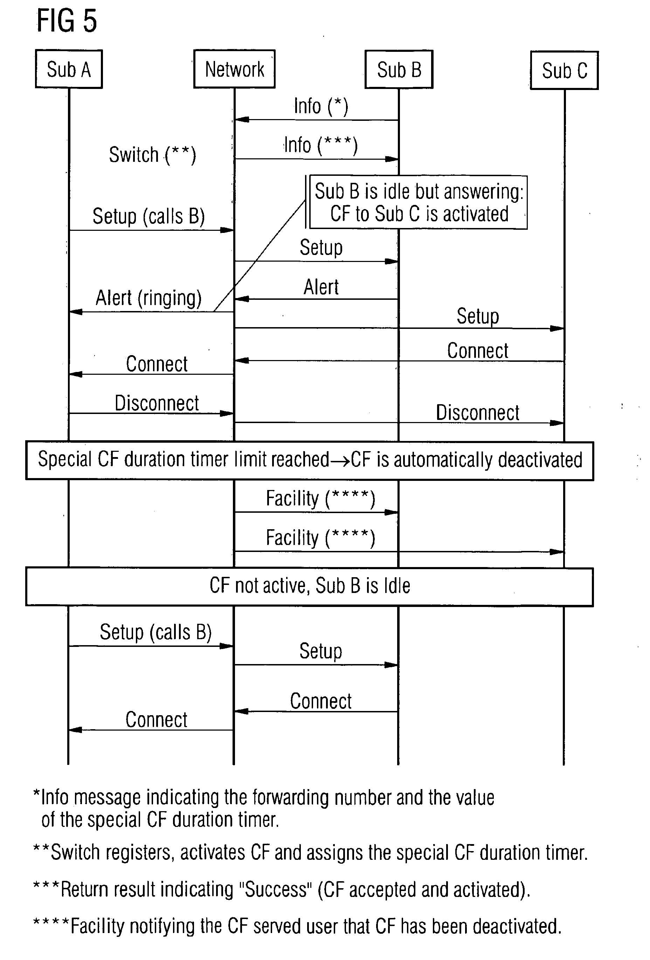

At figure 5 Sub B activates TCF (on No Reply) by giving information about the forwarded to subscriber number and the time duration before automatic CF deactivation by the Network. This is done by sending an SCI using Keypad protocol. Then network acknowledges the request from the user with indication success. Sub A calls B Sub who is idle but doesn't answer the call. Then CF is activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

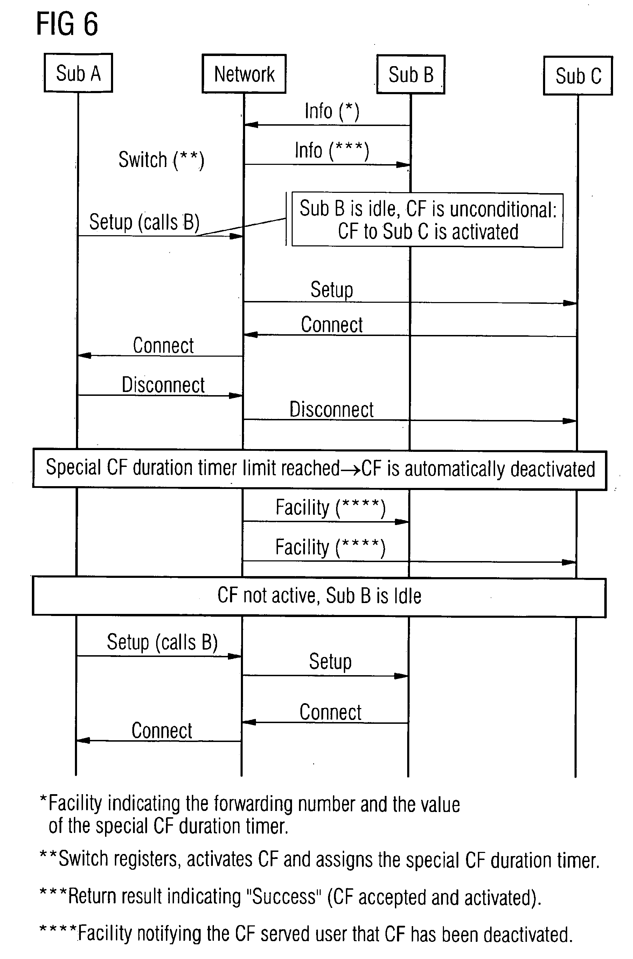

At figure 6 Sub B activates TCF (Unconditional) by giving information about the forwarded to subscriber number and the time duration before automatic CF deactivation by the Network. This is done by sending an SCI using Keypad protocol. Then network acknowledges the request from the user with indication success. Sub A calls B Sub, CF is unconditionaly activated and the call is routed to Sub C and communication between Sub A and Sub C is established. After some time Sub A disconnects the call. Then the TCF specific timer expires and CF is automatically deactivated by the network. Then Sub A tries to call Sub B again and the call is successfully established without CF involvement.

## Claims

1. Method of controlling duration of forwarding call connections within a telecommunication network in which a call connection can be established trough the network (Network) between a calling party (Sub A) and a first called party (Sub B), comprising the steps of:
- Activating a call forwarding procedure,
- initiating a timer by setting a predefined time period,
- forwarding an established call connection from the first called party (Sub B) to a second called party (Sub C),
- disconnecting the call connection between said parties, and
- deactivating the call forwarding procedure afterwards when expiring the predefined time period.

2. Method as claimed in claim 1, wherein the time period is predefined by a default value.

3. Method as claimed in claim 1, wherein the time period is predefined by the first called party (Sub B).

4. A switching system within a telecommunication network which is suitable for using the method according to any one of the previous claims.
